# EUROPÄISCHE PATENTANMELDUNG

(11) **EP 0 672 837 A2**
(43) Veröffentlichungstag der Anmeldung: **20.09.1995**
(21) Anmeldenummer: 94119711.3
(22) Anmeldetag: 14.12.1994
(51) Int. Cl.: F16B 5/06, B25B 5/10

(54) **Klemme zum Festklemmen eines Trägers an einer Platte oder dergleichen**

(30) Priorität: 25.01.1994 DE 4402031
(71) Anmelder: ROBERT KRAUSE GmbH & CO. KG, 73235 Weilheim (DE)
(72) Erfinder: Manner, Roland, D-73235 Weilheim/Teck (DE)
(74) Vertreter: Jackisch-Kohl, Anna-Katharina

(57) **Zusammenfassung**

Die Klemme hat einen Grundkörper (1) mit einer Auflage (2) sowie ein Widerlager (3), das am Grundkörper (1) vorgesehen ist und der Auflage (2) gegenüberliegt. Das Widerlager (3) trägt eine Klemmschraube (31, 32). Das Widerlager (3) ist relativ zur Auflage (2) verstellbar und selbsttätig unter seinem Eigengewicht aus einer Freigabestellung in eine Raststellung bewegbar. Dadurch kann das Widerlager (3) mit nur einer Hand so weit gegenüber dem Grundkörper (1) verstellt werden, bis es von der Auflage (2) den gewünschten Abstand hat. Nach Loslassen des Widerlagers (3) gelangt dieses selbsttätig in die Raststellung zurück und ist dann am Grundkörper (1) einwandfrei gesichert.

## Beschreibung

Die Erfindung betrifft eine Klemme zum Festklemmen eines Trägers an einer Platte oder dergleichen nach dem Oberbegriff des Anspruches 1.

Es sind Tischklemmen bekannt, die eine in einer bestimmten Höhe angeordnete Klemmschraube aufweisen. Sie wird zur Befestigung der Klemme an der Tischplatte gegen die Unterseite der Platte geschraubt. Damit die Tischklemme für unterschiedlich dicke Tischplatten verwendet werden kann, muß der Abstand zwischen der Auflage der Tischklemme und der Klemmschraube durch verstellen der Schraube eingestellt werden. Soll die Klemme auch für dicke Tischplatten eingesetzt werden, muß das Widerlager in einem entsprechenden Abstand zur Auflage vorgesehen sein. Damit die Klemme auch für Tischplatten geringer Dicke verwendet werden kann, muß die Klemmschraube entsprechend lang sein. Mit ihr läßt sich aber an einer dünnen Tischplatte keine ausreichend feste Klemmung erreichen.

Es sind auch Tischklemmen bekannt, bei denen das Widerlager für die Klemmschraube in unterschiedlichen Höhen am Grundkörper befestigt werden kann. Hierzu wird das Widerlager mit Schrauben am Grundkörper in der gewünschten Höhe befestigt. Um das Widerlager in unterschiedlichen Höhen am Grundkörper befestigen zu können, müssen die Schrauben gelöst und nach Verstellen des Widerlagers wieder am Grundkörper befestigt werden. Die Handhabung dieser bekannten Tischklemme ist umständlich und zeitaufwendig.

Der Erfindung liegt die Aufgabe zugrunde, die gattungsgemäße Klemme so auszubilden, daß das Widerlager einfach und schnell verstellt werden kann.

Diese Aufgabe wird bei einer Klemme der gattungsbildenden Art erfindungsgemäß mit den kennzeichnenden Merkmalen des Anspruches 1 gelöst.

Infolge der erfindungsgemäßen Ausbildung kann das Widerlager mit nur einer Hand aus seiner Raststellung in die Freigabestellung verstellt werden. Das Widerlager kann dann gegenüber dem Grundkörper so weit verstellt werden, bis es von der Auflage den gewünschten Abstand hat. Nach Loslassen des Widerlagers gelangt dieses unter seinem Gewicht in die Raststellung zurück. In dieser Lage ist das Widerlager einwandfrei am Grundkörper gehalten und kann nicht unbeabsichtigt aus seiner Lage verstellt werden. Die Klemme läßt sich dann einfach, z. B. an einer Tischplatte, montieren. Hierzu wird sie so auf die Tischplatte aufgesetzt, daß diese zwischen der Auflage und dem Widerlager bzw. der Schraube zu liegen kommt. Dann muß nur noch die Klemmschraube fest gegen die Plattenunterseite geschraubt werden. Da das Widerlager gegenüber dem Grundkörper verstellt werden kann, muß die Klemmschraube keine große Länge haben, um die Klemme an dünnen und an dicken Platten festklemmen zu können. Das Widerlager läßt sich jeweils in die gewünschte Lage rasch und einfach verstellen.

Weitere Merkmale der Erfindung ergeben sich aus den weiteren Ansprüchen, der Beschreibung und der Zeichnung.

Die Erfindung wird nachstehend anhand zweier in den Zeichnungen dargestellter Ausführungsbeispiele näher beschrieben. Es zeigt:
- Fig. 1: eine erfindungsgemäße Klemme mit einem Widerlager in Vorderansicht gemäß Pfeil I in Fig. 2,
- Fig. 2: die Klemme nach Fig. 1 teilweise in Seitenansicht und teilweise im Schnitt,
- Fig. 3: eine Darstellung entsprechend Fig. 2, jedoch mit dem Widerlager in einer Freigabestellung,
- Fig. 4: teilweise in Vorderansicht und teilweise im Schnitt die eine Hälfte einer zweiten Ausführungsform einer erfindungsgemäßen Klemme,
- Fig. 5: einen Schnitt längs der Linie V-V in Fig. 4,
- Fig. 6: die Klemme gemäß Fig. 4 in einer Darstellung entsprechend Fig. 2,
- Fig. 7: einen Schnitt längs der Linie VII-VII in Fig 6.

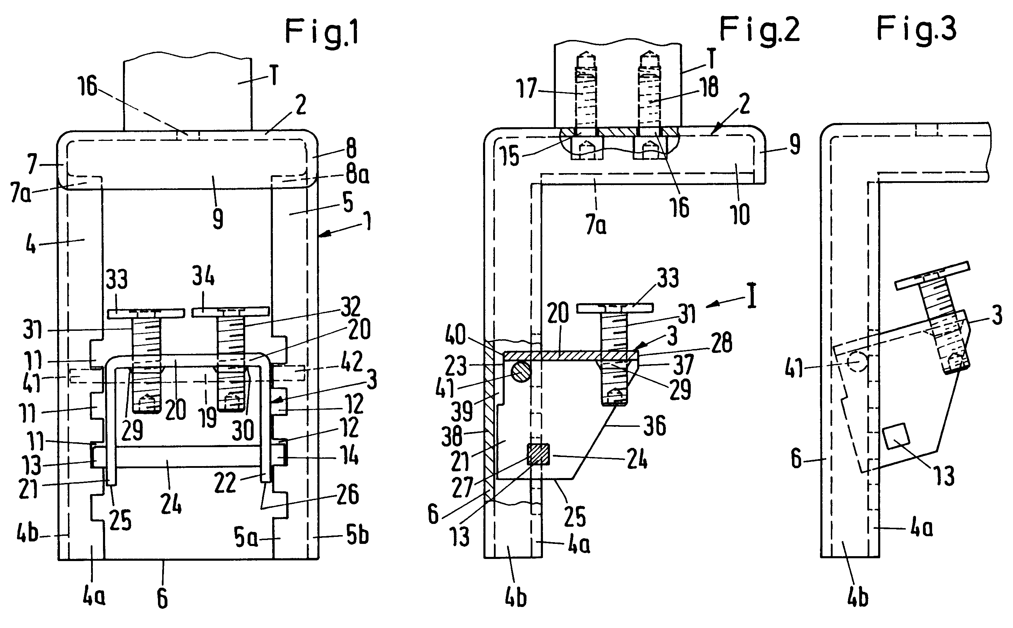

Die Klemme gemäß Fig. 1 dient zum Festklemmen eines Trägers T, wie beispielsweise eines Schwenkarmes, eines Lampenständers oder dgl., an einer (nicht dargestellten) Tischplatte.

Die Klemme weist einen Grundkörper 1 auf, der mit einer plattenartigen Auflage 2 auf der Tischplatte aufliegt. Der Auflage 2 ist ein Widerlager 3 zugeordnet, das in zwei randseitigen Schienen 4 und 5 des Grundkörpers 1 verschiebbar geführt und arretierbar ist. Der Grundkörper 1 hat in Seitenansicht L-Form, wobei sein kürzerer Schenkel die Auflage 2 und der längere Schenkel 6 mit seinen Längsrändern die U-förmigen Schienen 4 und 5 bildet. Die Längsränder sind L-förmig in Richtung zueinander abgewinkelt und haben stirnseitige Randabschnitte 4a, 5a und rechtwinklig hieran anschließende seitliche Randabschnitte 4b, 5b. Auch die Längsränder 7 und 8 der Auflage 2 sind L-förmig ausgebildet und haben in Richtung zueinander verlaufende Schenkel 7a, 8a. Infolge der L-förmigen Randausbildung hat die Auflage 2 eine hohe Formstabilität. An ihrer Stirnseite weist die Auflage 2 einen nach unten abgewinkelten Rand 9 auf, der sich bis in Höhe der Seitenränder 7 und 8 erstreckt (Fig. 1 und 2).

Die zum Schenkel 6 parallelen und in einer gemeinsamen Ebene liegenden Randabschnitte 4a, 5a weisen in Längsrichtung mit Abstand hintereinander liegende Rastöffnungen 11, 12 auf, in die das Widerlager 3 in seiner Raststellung (Fig. 1 und 2) mit Rastgegengliedern 13 und 14 ragt. Die Rastöffnungen 11, 12 sind rechteckig ausgebildet und in Richtung auf den gegenüberliegenden Randabschnitt 4a bzw. 5a offen.

Die Rastöffnungen der einander gegenüberliegenden Randabschnitte 4a und 5a liegen jeweils auf gleicher Höhe. Die Rastöffnungen 11, 12 der Randabschnitte haben vorzugsweise jeweils gleichen Abstand voneinander und sind in der vom Schenkel 2 abgewandten Hälfte der Randabschnitte vorgesehen.

Die seitlichen Ränder 7 und 8 und der vordere Rand 9 der Auflage 2 sind vorzugsweise gleich breit wie die Ränder 4 und 5 bzw. deren Randabschnitte 4a, 5a und 4b, 5b.

Die Auflage 2 weist etwa in halber Breite zwei mit Abstand hintereinander liegende Bohrungen 15 und 16 auf, durch welche Schrauben 17, 18 ragen, mit denen der Träger T mit der Klemme verbunden wird.

Das Widerlager 3 ist als U-förmiger Bügel ausgebildet, dessen Quersteg 20 in Klemmstellung des Bügels parallel zur Auflage 2 verläuft. Das Widerlager 3 ist um eine Schwenkachse 19 (Fig. 1) schwenkbar am Grundkörper angeordnet. Der Quersteg 20 des Widerlagers ist mit den senkrecht zu ihm und zueinander parallelen Schenkeln 21 und 22 einstückig ausgebildet. Die Schenkel liegen bei montiertem Widerlager 3 unmittelbar benachbart zu den Randabschnitten 4a und 5a des Grundkörpers 1. Gemäß Fig. 2 haben die Schenkel 21, 22 etwa trapezförmigen Umriß, derart, daß ihre vom Schenkel 6 des Grundkörpers 1 abgewandten stirnseitigen Ränder 36 nahezu über ihre ganze Länge abgeschrägt sind. Die Breite der Schenkel nimmt somit nach unten ab und ist am unteren Rand 25 nur noch geringfügig größer als die halbe Breite des Quersteges 20. Nur ein schmaler oberer, an den Quersteg 20 anschließender Randabschnitt 37 verläuft senkrecht und parallel zum rückwärtigen Rand 38 der Schenkel 21, 22. Er ist in seinem an den Quersteg 20 anschließenden Teil 38 schulterförmig nach innen abgesetzt. Dieser Teil 39 erstreckt sich über etwa ein Drittel der Höhe des Randes 38 und geht in den rückwärtigen Rand 40 des Quersteges 20 über. Die Tiefe der Schulter 39 ist so gewählt, daß das Widerlager 3 gegenüber dem Grundkörper 1 um die Achse 19 so weit verschwenkt werden kann, bis seine Rastgegenglieder 13, 14 aus den Rastöffnungen 11, 12 freikommen.

Die Schenkel 21, 22 des Widerlagers 3 liegen senkrecht zu den Randabschnitten 4a, 5a des Grundkörpers 1. Wie Fig. 1 zeigt, sind die Schenkel 21, 22 des Widerlagers 3 zwischen den Randabschnitten 4a, 5a mit geringem Abstand von ihnen angeordnet. Dieser Abstand ist vorteilhaft nur so groß, daß das Widerlager 3 ohne Schwierigkeiten gegenüber dem Grundkörper 1 geschwenkt werden kann.

Die Schwenkachse 19 liegt unmittelbar unterhalb des Quersteges 20 des Widerlagers 3 und ragt mit ihren Enden 41, 42 über dessen beide Schenkel 21 und 22 nach außen. Die Achse 19 liegt unmittelbar benachbart zu den Innenseiten der Randabschnitte 4a, 5a (Fig. 2) und mit Abstand zum Schenkel 6. Dieser Abstand ist im Ausführungsbeispiel etwa gleich dem Durchmesser der Achse 19. Die Enden 41, 42 der Achse 19 haben nur geringen Abstand von den einander zugewandten Innenseiten der Randabschnitte 4a, 5b (Fig. 1).

Das Widerlager 3 kann auch nur die Enden 41, 42 aufweisen, so daß die zwischen den Schenkeln 21, 22 sich erstreckende Achse 19 nicht vorgesehen ist. Ist sie aber vorhanden, führt sie zu einer hohen Stabilität des Widerlagers 3.

Im unteren Drittel ragen über die sich nach unten verjüngenden Schenkel 21 und 22 des Widerlagers 3 jeweils die Rastgegenglieder 13 und 14. Sie sind durch die überstehenden Enden einer die Schenkel 21, 22 durchsetzenden Stange 24 und dgl. gebildet. Sie hat eckigen, im Ausführungsbeispiel quadratischen Querschnitt (Fig. 2). Die Dicke der Rastgegenglieder 13, 14 in Längsrichtung der Randabschnitte 4a, 5a ist geringfügig kleiner als die Höhe der Rastöffnungen 11, 12. Dadurch kommen die Rastgegenglieder 13, 14 mühelos aus den Rastöffnungen 11, 12 frei bzw. können leicht in sie einrasten. Es ist auch möglich, nur die überstehenden Stangenenden mit dem rechteckigen Querschnitt zu versehen, so daß die Stange zwischen den Schenkeln beispielsweise runden Querschnitt hat. Die Rastgegenglieder 13, 14 können auch nur Ansätze an den voneinander abgewandten Außenseiten der Schenkel 21, 22 sein. In diesem Fall fehlt die zwischen den Schenkeln 21, 22 sich erstreckende Stange 24. Die durchgehende Stange 24 hat jedoch den Vorteil, daß sie zur Festigkeit und Stabilität des Widerlagers 3 beiträgt.

Die Stange 24 durchsetzt die Schenkel 21, 22 etwa in halber Breite ihrer verjüngten Enden und liegt mit Abstand oberhalb ihres unteren Randes 25, 26. Die Rastgegenglieder 13, 14 liegen in Raststellung des Widerlagers 3 auf dem unteren Rand der jeweiligen Rastöffnung 11, 12 auf. Wie Fig. 2 zeigt, ragen die Rastgegenglieder 13, 14 geringfügig in die Schienen 4, 5 des Grundkörpers 1, so daß die dem Schenkel 6 des Grundkörpers 1 zugewandte Rückseite 27 der Rastgegenglieder 13, 14 innerhalb der Schienen 4, 5 liegt. Außerdem stehen die Rastgegenglieder 13, 14 über die Außenseite der Randabschnitte 4a, 5a vor (Fig. 2). Dieser Überstand ist größer als in Richtung auf den Schenkel 6.

Der Quersteg 20 des Widerlagers 3 weist dicht benachbart zu seinem vom Schenkel 6 abgewandten Rand 28 zwei auf gleicher Höhe und mit Abstand nebeneinander liegende Bohrungen 29 und 30 auf, in die jeweils eine Klemmschraube 31 und 32 geschraubt ist. Die Schrauben sind gleich ausgebildet und haben an dem dem Schenkel 2 des Grundkörpers 1 zugewandten Ende zwei Klemmteller 33 und 34,
mit denen sie in Klemmstellung der Klemme ganzflächig an der Unterseite der Tischplatte anliegen. Bei montierter Klemme liegt diese mit ihrer Auflage 2 auf der Tischplatte oder dergleichen, während die Klemmteller 33, 34 gegen die Plattenunterseite geschraubt werden, so daß die Auflage 2 fest gegen die Platte gepreßt ist.

Um die Klemme an unterschiedlich dicken Platten befestigen zu können, wird das Widerlager 3 gegenüber der Auflage 2 nach oben oder unten verstellt, um den Abstand zwischen der Auflage und dem Widerlager bzw. dessen Klemmtellern 33 und 34 zu verändern.

Um den Abstand zwischen der Auflage 2 und dem Widerlager 3 zu verändern, wird das Widerlager aus seiner Raststellung gemäß Fig. 2 nach oben in die in Fig. 3 dargestellte Lösestellung verschwenkt. Das Widerlager 3 wird hierbei um seine Achse 19 im Gegenuhrzeigersinn geschwenkt, wobei die Rastgegenglieder 13, 14 aus den zugehörigen Rastöffnungen 11, 12 freikommen (Fig. 3). In dieser Lage kann das Widerlager 3 in Höhenrichtung nach oben oder unten verschoben werden, wobei es mit den überstehenden Enden 41, 42 der Schwenkachse 19 in den Schienen 4 und 5 des Grundkörpers 1 gleitet.

Sobald das Widerlager 3 in die gewünschte Lage verstellt worden ist, wird es losgelassen. Dann schwenkt es unter seinem Eigengewicht selbsttätig in die Raststellung gemäß Fig. 1 und 2 zurück. Die Rastgegenglieder 13, 14 gleiten in die zugehörigen Rastöffnungen 11 und 12 des Grundkörpers 1. Das Widerlager 3 ist dann einwandfrei am Grundkörper 1 gesichert und kann nicht unbeabsichtigt nach unten rutschen. Die Rastgegenglieder 13, 14 liegen unter dem Gewicht des Widerlagers 3 auf dem unteren Rand der Rastöffnungen 11, 12 auf. Zusätzlich liegt das Widerlager 3 mit dem Rand 38 seiner Schenkel 21, 22 am Schenkel 6 des Grundkörpers 1 an. Da der weitaus größte Teil des Widerlagers 3 über die Randabschnitte 4a, 5a des Grundkörpers 1 ragt und an diesem überstehenden Teil auch die Schrauben 31, 32 vorgesehen sind, ist die Masseverteilung des Widerlagers 3 so, daß es aus der Lösestellung gemäß Fig. 3 selbsttätig in die Raststellung gemäß Fig. 2 zurückschwenkt. In dieser Lage ist das Widerlager 3 sicher am Grundkörper gehalten. Es müssen dann nur noch die Klemmteller 33, 34 gegen die Unterseite der Tischplatte geschraubt werden, bis die Klemme fest an der Platte gehalten ist. Durch die beschriebene Ausbildung des Widerlagers 3 am Grundkörper 1 läßt es sich mit nur einer Hand einfach und schnell in die gewünschte Lage zum Grundkörper 1 verstellen, so daß die Klemme problemlos an Platten unterschiedlicher Stärke befestigt werden kann.

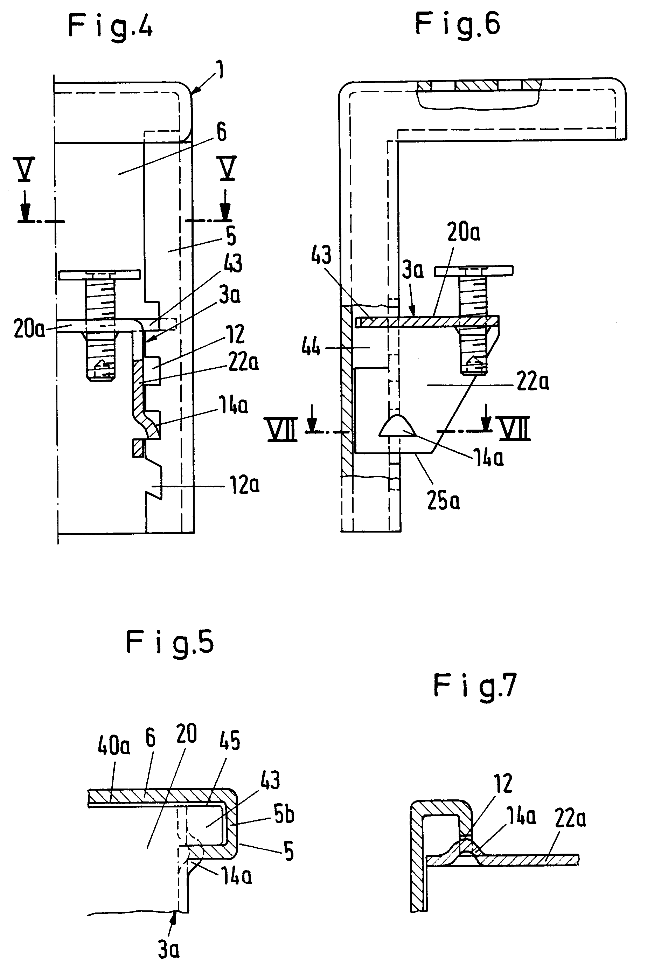

Bei der Ausführungsform nach den Fig. 4 bis 7 wird die Schwenkachse für das Widerlager 3a durch aus den Schenkeln herausgestanzte, in Draufsicht (Fig. 5) rechteckige Lappen 43 gebildet, die in Verlängerung des Quersteges 20a des Widerlagers 3a liegen.

Die Schenkel des Widerlagers weisen darum entsprechende Ausnehmungen 44 auf (Fig. 6). Die herausgebogenen Lappen 43 liegen in der gleichen Ebene wie der Quersteg 20a. Wie die Fig. 5 und 6 zeigen, liegen der rückwärtige Rand 40a des Quersteges 20a und der rückwärtige Rand 45 des Lappens 43 in einer gemeinsamen Ebene. Außerdem haben diese Ränder 40a, 45 Abstand vom Schenkel 6 des Grundkörpers 1. Dieser Abstand ist so groß, daß das Widerlager 3a in der beschriebenen Weise zur Längsverstellung geschwenkt werden kann.

In den Fig. 4 und 5 ist nur die eine Hälfte der Klemme dargestellt. Wie bei der vorigen Ausführungsform ist die andere Klemmenhälfte spiegelbildlich hierzu ausgebildet. Der Lappen 43 ragt in die Schiene 5 des Grundkörpers 1 und hat geringen Abstand vom Schenkel 5b dieser Schiene. Dadurch läßt sich das Widerlager 3a leicht in der gewünschten Richtung im Grundkörper 1 verschieben.

Abgesehen von der anderen Ausbildung der Schwenkachse des Widerlagers 3a kann es im übrigen gleich ausgebildet sein bei der Ausführungsform nach den Fig. 1 bis 3. Die Fig. 6 und 7 zeigen jedoch eine weitere Möglichkeit der Ausbildung des Rastgegengliedes 14a. Es wird durch eine Ausformung des Schenkels 22a des Widerlagers 3a gebildet. In Draufsicht gemäß Fig. 7 hat des Rastgegenglied 14a Dreieckform. Das Rastgegenglied 14a steht über die vom jeweils anderen Schenkel abgewandte Außenseite vor (Fig. 4) und ist an dem vom Quersteg 20a des Widerlagers 3a abgewandten unteren Rand vom Schenkel 22a des Widerlagers 3a getrennt. Die in Richtung auf den Quersteg 20a gemessene Länge des Rastgegengliedes 14a ist geringfügig kleiner als die entsprechende Länge der Rastöffnung 12 im Schenkel 22a.

Wie Fig. 6 zeigt, nimmt die Breite des Rastgegengliedes 14a in Richtung auf den freien Rand 25a des Schenkels 22a stetig zu. In der Rastlage ist darum das Widerlager 3a sicher in der jeweiligen Rastöffnung 12 arretiert.

Auch im anderen Schenkel des Widerlagers 3a ist eine entsprechendes Rastgegenglied vorgesehen.

Die Verstellung des Widerlagers 3a erfolgt in gleicher Weise wie beim vorigen Ausführungsbeispiel nach den Fig. 1 bis 3.

Die Ausbildung der Rastgegenglieder gemäß den Fig. 4 bis 7 kann auch bei der Ausführungsform gemäß den Fig. 1 bis 3 vorgesehen sein.

Fig. 4 zeigt noch die Möglichkeit, die Rastöffnungen in anderer Weise zu gestalten. Wie für die Rastöffnung 12a dargestellt, ist sie in Richtung auf den Schenkel 5b nach unten geneigt. Dadurch ist zuverlässig verhindert, daß die Rastgegenglieder des Widerlagers unbeabsichtigt aus den Rastöffnungen herausrutschen können.

## Patentansprüche

1. Klemme zum Festklemmen eines Trägers, wie eines Schwenkarmes, an einer Platte oder dergleichen, mit einem Grundkörper, der eine Auflage hat, und mit einem am Grundkörper angeordneten, der Auflage gegenüberliegenden Widerlager, das mindestens eine Klemmschraube trägt,
dadurch gekennzeichnet, daß das Widerlager (3, 3a) relativ zur Auflage (2) verstellbar und selbsttätig unter seinem Eigengewicht aus einer Freigabestellung in eine Raststellung bewegbar ist.

2. Klemme nach Anspruch 1,
dadurch gekennzeichnet, daß das Widerlager (3, 3a) verschiebbar am Grundkörper (1) angeordnet ist.

3. Klemme nach Anspruch 1 oder 2,
dadurch gekennzeichnet, daß das Widerlager (3, 3a) zum Verstellen in die Freigabe- und die Raststellung schwenkbar am Grundkörper (1) angeordnet und vorzugsweise mit seiner Schwenkachse (19, 43) in U-förmigen Schienen (4, 5) des Grundkörpers (1) geführt ist.

4. Klemme nach einem der Ansprüche 1 bis 3,
dadurch gekennzeichnet, daß der Grundkörper (1) etwa L-Form hat, und daß vorzugsweise sein längerer Schenkel die Schienen (4, 5) aufweist und sein kürzerer Schenkel (2) die Auflage bildet.

5. Klemme nach einem der Ansprüche 1 bis 4,
dadurch gekennzeichnet, daß das Widerlager (3, 3a) U-Form hat, und daß vorzugsweise sein Quersteg (20, 20a) in Raststellung etwa parallel zur Auflage (2) des Grundkörpers (1) liegt und die vorzugsweise zueinander parallelen Schenkel (21, 22, 22a) des Widerlagers (3, 3a) mit geringem Abstand neben Randabschnitten (4a, 5a) der Schienen (4, 5) liegen.

6. Klemme nach Anspruch 5,
dadurch gekennzeichnet, daß die Schwenkachse (19) des Widerlagers (3) mit geringem Abstand unterhalb des Quersteges (20) des Widerlagers (3) liegt und vorzugsweise mit über die Schenkel (21, 22) des Widerlagers (3) ragenden Enden (41, 42) in die Schienen (4, 5) ragt.

7. Klemme nach einem der Ansprüche 1 bis 6,
dadurch gekennzeichnet, daß das Widerlager (3a) zur Bildung der Schwenkachse aus den Schenkeln (22a) herausgebogene Lappen (43) aufweist, die in die Schienen (4, 5) des Grundkörpers (1) ragen.

8. Klemme nach einem der Ansprüche 1 bis 7,
dadurch gekennzeichnet, daß das Widerlager (3, 3a) Rastgegenglieder (13, 14, 14a) aufweist, die in Raststellung vorzugsweise mit Spiel in zugehörige Rastöffnungen (11, 12, 12a) der Schienen (4, 5) ragen.

9. Klemme nach Anspruch 8,
dadurch gekennzeichnet, daß die Rastgegenglieder (13, 14) durch über die Schenkel (21, 22) des Widerlagers (3) ragende Enden einer die Schenkel durchsetzenden, im Querschnitt vorzugsweise quadratischen Stange (24) gebildet sind.

10. Klemme nach einem der Ansprüche 1 bis 9,
dadurch gekennzeichnet, daß die Rastgegenglieder (14a) aus den Schenkeln (22a) des Widerlagers (3a) herausgebogene Teile sind.

11. Klemme nach einem der Ansprüche 1 bis 10,
dadurch gekennzeichnet, daß die Enden (41, 42) der Schwenkachse (19) in Raststellung des Widerlagers (3) an den Randabschnitten (4a, 5a) der Schienen (4, 5) anliegen, die die Rastöffnungen (11, 12) aufweisen.

12. Klemme nach einem der Ansprüche 1 bis 11,
dadurch gekennzeichnet, daß sich die vorzugsweise plattenartigen, trapezförmigen Schenkel (21, 22, 22a) des Widerlagers (3, 3a) von der Schwenkachse (19, 43) aus nach unten verjüngen, und daß vorzugsweise die Rastgegenglieder (13, 14; 14a) im Bereich der verjüngten Schenkelenden vorgesehen sind.

13. Klemme nach einem der Ansprüche 1 bis 12,
dadurch gekennzeichnet, daß der Quersteg (20, 20a) des Widerlagers (3, 3a) die Klemmschraube (31, 32) aufweist, die vorzugsweise außerhalb der Schienen (4, 5) des Grundkörpers (1) angeordnet ist.
